# EUROPEAN PATENT APPLICATION

(11) **EP 4 434 321 A1**
(43) Date of publication of application: **25.09.2024**
(21) Application number: 24165425.0
(22) Date of filing: 22.03.2024
(51) Int. Cl.: A01D 45/02

(54) **ELECTRICALLY DRIVEN AND CONTROLLED DRIVE BOX FOR CORN HEADERS**

(30) Priority: 23.03.2023 AR P230100712
(71) Applicant: B.P.B. Mediterránea S.A., 5900 Villa María (CÓRDOBA) (AR)
(72) Inventor: Boetsch, Gustavo Alejandro, Villa María (AR)
(74) Representative: Canela Giménez, Teresa

(57) **Abstract**

Transmission box for corn headers electronically driven and controlled, intended to be applied in harvesting machines of the type that have built-in headers to guide and channel the plant that is harvested, to then start the cultivation of its non-useful remains. It comprises an electric motor (9) that gives the control a set of axle and central gears (15) and (16) through which they distribute the rotation to the axes (11) of the lifting chains of each furrow, as well as to the axles (12) that control the rolls of the same groove.

## Description

### SCOPE OF THE INVENTION

The present invention, for which a patent is requested, has as its main object an ELECTRICALLY DRIVEN AND CONTROLLED TRANSMISSION BOX FOR CORN HEADERS, specially designed to be applied in harvesting machines of the type that have built-in headers to guide and channel the plant being harvested, to then uproot the crop from its non-useful remains.

More specifically, the present invention relates to a novel electrically driven transmission box, mounted in correspondence of each row of the head itself, replacing the conventional control resources used to date that are mechanically driven.

As is known, the transmission boxes for corn headers that are known today are used one per furrow, and they are distinguished because they receive control through a power transmission shaft, at a pre-established speed and power, their function being to multiply and/or reduce to drive all the other assemblies that make up the header, such as the gears, chains, and toe caps, which are basically in charge of channeling the plant, collecting it, separating the useful parts, and arranging them for subsequent phases carried out by the harvesting machine.

In this sense, it is highlighted that with the transmission box referred to in this invention, an avant-garde option is shown that takes into account the technological advances that the agricultural industry is making globally in machinery. Mechanical assemblies can be seen, which are mutating to work electrically, both in simple drive tools, to comprehensive agricultural machines that work remotely and autonomously.

This operating principle leads us to require that transmissions with these characteristics also work electrically, in order to be synchronized and linked to the other components and systems of the machine, as well as achieving performances close to 99% efficiency.

One of the main advantages is to offer a direct relationship with the advance of the combine individually, that is, furrow by furrow, which allows it to be synchronized as the forward speed increases automatically the working speed of the transmissions, with the corresponding speeds for such advancement, this being a virtue that the mechanical version cannot perform in such a way. It should also be noted that when working on plateaus and/or when making curves while harvesting, with this invention it can be operated individually and adjust in an autonomous mode each box to increase speeds.

It is an invention that defines a new combination of means designed to achieve a superior result, being unpredictable and surprising even for an expert in the specialty. Consequently, in addition to being new, its constructive and functional conception shows a clear inventive activity, so that it meets the conditions required by the Law to be considered a patent for an invention.

### PREVIOUS ART

As is known, currently these gearboxes are mechanically driven, which means that they are made up of a high number of components that, when working together mechanically, the final efficiency of the machine is not high. Since there are losses due to heat generation due to rubbing and friction, and this happens in all the furrows, which on average according to the market is 20 rows per machine. Furthermore, as it does not contain electronic components and has very little internal space it is not feasible to incorporate the monitoring and control systems that the same combine already has.

The optimal harvesting speed (relationship between linear forward speed / box rpm) is a key factor in reducing loss levels.

The speed limit is conditioned by the state of the crop among other factors, so with the current system (mechanical control) it is not possible to adjust the optimal harvesting speed dynamically due to the variation in the state of the crop in different areas.

In the same way, but to a lesser extent, as mentioned above, it happens that, in high working width headers, when making turns at the headers of the batches, the boxes all continue working at the same rpm as each other, which produces variations in the quality of the plant harvest in the different work grooves.

The rpm of the boxes is linked to the linear forward speed of the machine. Therefore, for different feed rates the sprocket configurations must be changed manually, and in this way synchronize both speeds. This has three problems, the first is that the speed relationships are limited, the second is that they demand that the user must have a large number of combinations, and the third is that they must perform this task manually.

### BRIEF DESCRIPTION OF THE INVENTION -ADVANTAGES

One of the main objectives of this invention is to be an avant-garde option in the face of technological advances that the agricultural industry is making globally in machinery, mechanical assemblies, among others, which are mutating to work electrically from simple drives, to integrally in agricultural machines that work remotely and autonomously. This electrification requires transmissions with these characteristics to also work electrically, in order to be synchronized and linked to the other components and systems of the machine. As well as achieving performances close to 99% efficiency.

One of the main advantages of using an electrically driven gearbox is to offer a direct relationship with the advance of the combine harvester individually, that is, furrow by furrow, which allows that as the forward speed increases, the synchronize automatically the working speed of the transmissions, with the corresponding speeds for such advancement, this being a virtue that the mechanical version cannot perform in such a way.

It should also be noted that when working on plateaus and/or in moments of making curves while harvesting, with this invention you can operate in individually and autonomously adjust the speeds in each box on demand for the harvesting speed. As is known, in these cases the speed at one end of the head will be greater than in the middle where there will be another lower speed, and at the opposite end an even lower speed, due to the radii described in the working path.

It can be said that the self-generation of energy, the reduction of emissions, as well as the consumption of energy sources is and will be increasingly requested, as well as robotization is this type of machinery, which will require a electric drive box as described in this invention.

Furthermore, this invention contemplates the use of a torque limiter (which may be arranged both internally and externally), which is a safety element of the device since in the event of excessive torque/tension peaks that can force the box due to variations in the terrain to be worked on or jamming of some kind that usually happens. This release acts by decoupling the power transmission link to the box, or by limiting the intensity of electric current and/or through voltage, which could eliminate the use of conventional limiters.

In this sense, it is highlighted that the difference with respect to the mechanical lock in all boxes is beneficial, since a part that is composed of multiple mechanical components that can be the cause of failure is eliminated, achieving in addition, that everyone works in the same way, to reduce costs, etc.

It is also highlighted that, with the gearbox of this invention, when it is electrically driven, it allows it to be controlled, communicated, and maneuvered from the same monitor, interface, and electronics that the machines already have nowadays. Allowing everything to work with greater control, harmony, and linkage between the parties, also achieving full control over the system for its control and improvement in its operational service. Another advantage of the invention is the reduction of noise throughout the header, which improves perception and comfort for the machinist.

The transmission box to which the present invention refers is distinguished because it includes an electric motor that controls a set of axles and central gears through which they distribute the rotation to the axles of the lifting chains of each furrow, as well as the axles that command the rolls of the same groove.

The same shaft and central gears can be used as a control to control a cutting blade. It is clarified that both the distribution and internal configuration of all the aforementioned gears and the position of mounting of the electric drive motor, may vary by virtue of the design of the box, but the principle of operation and internal relationship is the same.

### INVENTIVE ACTIVITY

No transmission box for corn headers known in the present day proposes, and does not even suggest, the constructive solution that arises from what is indicated in the preceding paragraphs, which is why it is a proposal that, in addition to being novel, has a clear inventive activity.

### SYNTHETIC DESCRIPTION OF THE FIGURES

To specify the advantages briefly mentioned, to which users and those skilled in the art will be able to add many more, and to facilitate the understanding of the constructive, constitutive, and functional characteristics of the invented transmission box, a preferred embodiment example is described below, which is illustrated schematically and without a determined scale, in the attached plates, with the express clarification that, precisely, since it is an example, it is not appropriate to assign a limiting or exclusive character to the scope of protection of the present invention, but rather it simply has a merely explanatory and illustrative intention of the basic conception on which it is based.
Figure 1 is a schematic perspective that shows the mechanical control currently used by transmission boxes in corn headers in general.
Figure 2 is an exterior perspective view representing a groove of corn header that includes the transmission box of this invention.
Figure 3 is also a perspective view of the same transmission box as in the previous figure, without the casing that closes it.
Figure 4 is also a perspective showing the combination of gears that make up the box of this invention.
Figure 5 is an exploded perspective of the same combination of figure three gears.
Figure 6 is an exploded perspective similar to the previous figure, observed from another side.

It is clarified that, in all figures, with the same reference numbers and letters, the same or equivalent parts or elements constituting the assembly correspond, according to the example chosen for the present explanation of the invented transmission box.

### DETAILED DESCRIPTION OF A PREFERRED EXAMPLE

### PREVIOUS ART:

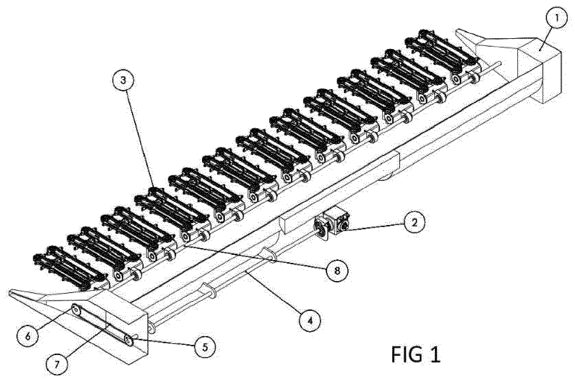

Figure 1 is a graphic representation of what the control for the operation of a corn header currently looks like.

It can be seen that it is arranged with a chassis (1) which has a platform that links it to the combine. The transmission boxes (3) that control the collection system are mounted on said chassis (1). The number of boxes (3) or furrows depends on the header configuration and determines the working width, together with the distance between furrows.

The mechanical drive of the boxes (3) is carried out through a kinematic control system composed of the control bar (4) coupled to the combine's own power take-off (2) on the one hand, and to the gear wheels (5) and (6), the lateral control chain (7), and the box control bar (8).

### TRANSMISSION BOX INVENTED

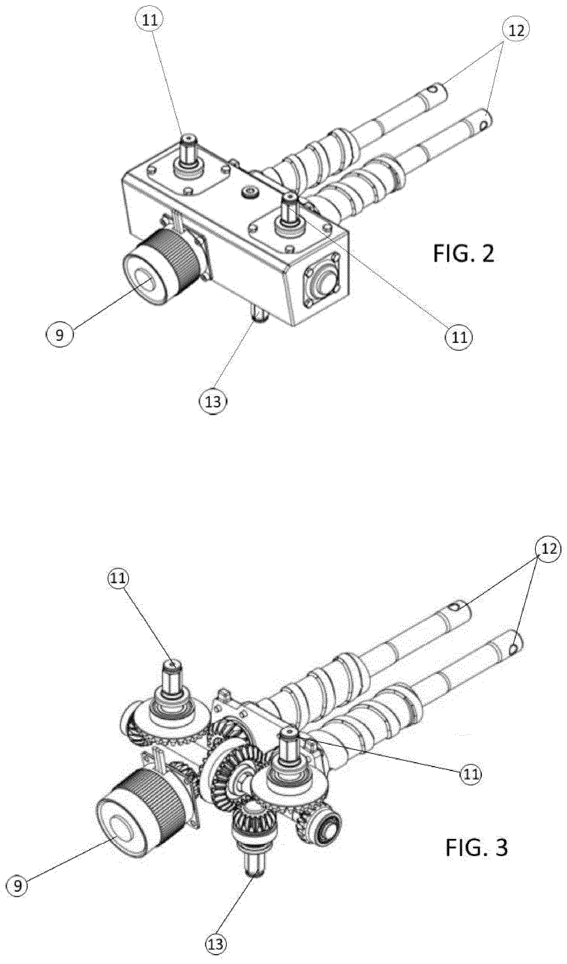

If we now look at figures 2, 3 and 4, it is possible to see that the transmission box for corn headers of the present invention is distinguished because it is driven by an electric motor (9) that projects out of the box, on one of its lateral sides, which gives control to the entire assembly of axle and central gears that distribute the rotation towards the axles (11) of the lifting chains, the axes that control the rollers (12), and may or may not have the cutting blade command axis (13).

Both the distribution and internal configuration of all the gears and the mounting position of the electric motor (9) may vary due to the design of the box, but the construction and operating principle would be the same.

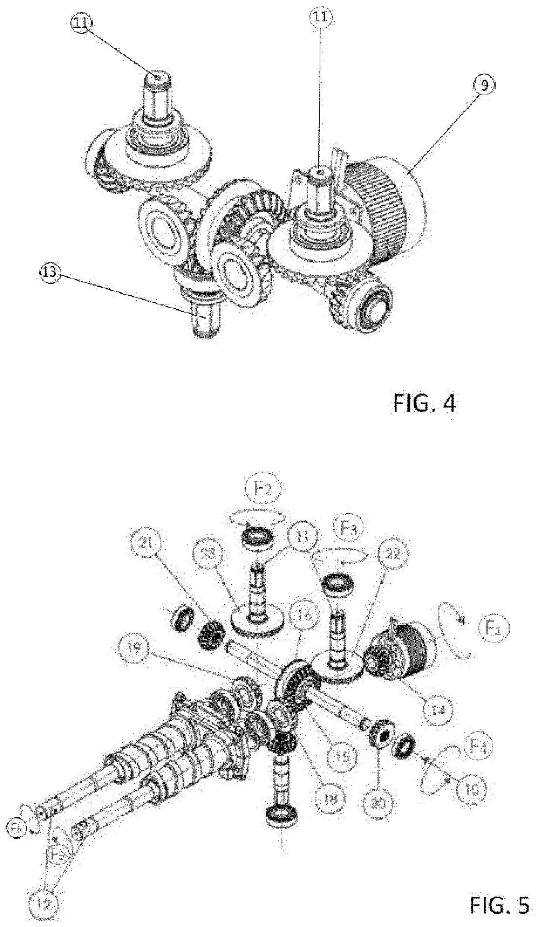

If we now look at figure 5, we can see that, in this embodiment, the invented transmission box has the shaft of the electric motor (9) arranged to rotate counterclockwise, as indicated by the arrow (F1) with respect to a horizontal axis, in which case the aforementioned control shafts (11) for the lifting chains rotate as indicated by the arrows (F2) and (F3) regarding their respective vertical axes.

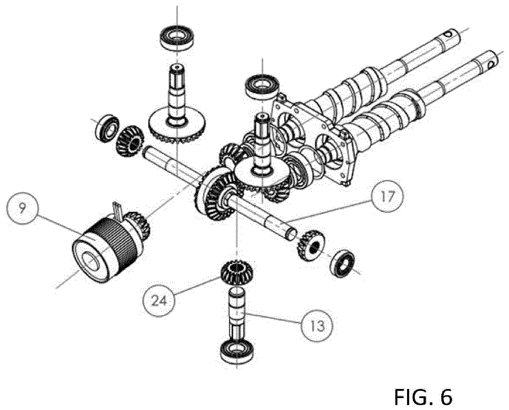

Likewise, the central axis (17) (indicated in figure 6) produces an anti-clockwise rotation (F4), while the roles (12) will have respective turns (F5) y (F6).

Likewise, observing figures 3 to 6 it can be seen that the gear (14) mounted on the output shaft of the motor (9) is coupled and transmits the rotation in the gear (15), which produces the aforementioned counterclockwise rotation (F4) of the shaft (17), as well as the gears (20) and (21) mounted thereon. In this way, the control shafts (11) rotate in opposite directions to each other to generate the subsequent transfer of the plant from its place of origin, and channel it in the direction of the combine once it has been started.

In the same way, through the link of the gears (15) and (16) that respectively mesh with the gears (18) and (19) they produce the rotation of the axes of the rollers (12) in the opposite direction to each other, which is also a necessary condition since these work together to channel, direct the crop, and remove the excess from the lower area of the machine chassis, which will be cut by the blades that are anchored to the axis of the aforementioned cutting blade (13). Precisely figure 6 shows that the gear (15) is linked to gear (24) that drives the drive shaft of the cutting blade (13).

## Claims

1. TRANSMISSION BOX FOR CORN HEADERS ELECTRONICALLY DRIVEN AND CONTROLLED, intended to be applied in harvesting machines of the type that have built-in headers to guide and channel the plant that is harvested, to then start the cultivation of its non-useful remains, **characterized in that** it comprises an electric motor (9) that gives the control a set of axle and central gears (15) and (16) through which they distribute the rotation to the axes (11) of the lifting chains of each furrow, as well as to the axles (12) that control the rolls of the same groove.

2. TRANSMISSION BOX FOR CORN HEADERS, according to what was claimed in 1, characterized because the box includes a torque limiter (which may be arranged both internally and externally), which acts by decoupling the power transmission link to the box.

3. TRANSMISSION BOX FOR CORN HEADERS, according to what was claimed in 1, characterized because the box includes a torque limiter (which may be arranged both internally and externally), which acts by limiting the intensity of electric current.

4. TRANSMISSION BOX FOR CORN HEADERS, according to what was claimed in 1, characterized because the box includes a torque limiter (which may be arranged both internally and externally), which acts by limiting the voltage of the electric current.

5. TRANSMISSION BOX FOR CORN HEADERS, according to claimed in 1, **characterized in that** the central gear (15) is linked to the gear (24) that drives the cutting blade command shaft (13).
